Europäisches Patentamt

European Patent Office

Office européen des brevets

(19)

(11) Publication number: **0 184 097 B1**

(12) **EUROPEAN PATENT SPECIFICATION**

(45) Date of publication of patent specification: 03.04.91  (51) Int. Cl.⁵: **C08K 3/30**, C08L 33/06, G01N 21/55

(21) Application number: 85114917.9

(22) Date of filing: 25.11.85

(54) Reflectance standard.

(30) Priority: 04.12.84 US 678120

(43) Date of publication of application:
11.06.86 Bulletin 86/24

(45) Publication of the grant of the patent:
03.04.91 Bulletin 91/14

(84) Designated Contracting States:
CH DE FR GB IT LI SE

(56) References cited:
DE-A- 2 251 708
US-A- 3 512 895

(73) Proprietor: MILES INC.
1127 Myrtle Street
Elkhart Indiana 46514(US)

(72) Inventor: Hernicz, Ralph
54427 Faye Drive
Osceola, IN 46561(US)

(74) Representative: Dänner, Klaus, Dr. et al
c/o Bayer AG Konzernverwaltung RP Paten-
tabteilung
W-5090 Leverkusen 1 Bayerwerk(DE)

## Description

The present invention relates to a reflectance standard and, more particularly, this invention relates to a reflectance standard composed of barium sulphate and a methyl acrylate or methyl methacrylate polymer and a method for using it.

Applications calling for the measurement of light reflectance, or the use of light reflectance measurements, are generally faced with a wide selection of materials which can be used for standardization of reflection measurements. A variety of powders, paints, plastics, tiles are used for the purpose of establishing a standard by which other reflectance measurements can be gauged. Unfortunately, materials which have good initial reflectance characteristics are often unstable to light, are fragile and lack durability, are not cleanable, are expensive, are difficult to work with or to manufacture, age poorly, fail to reflect a high percentage of incident light, lack uniform reflectance over a desired wavelength range, decrease substantially in reflectance at shorter wavelengths and thereby fail to have the characteristics necessary to achieve a good reflectance standard which is usable as a standard over long periods of time. Visible light is only a part of the electromagnetic energy band. All sources of light, whether natural sunlight or artificial light, emit energy in the ultraviolet and in the infrared bands, as well as visible energy in the form of light. Upon exposure to electromagnetic energy photochemical damage can take place. Normally such damage takes two forms; fading or darkening of colors and structural damage caused by the breakdown of molecular bonds. This damage is not instantaneous, but takes place over long periods of time and is the cumulative effect of exposure. Irradiation by visible light in the 400 to 500 nanometer range primarily causes fading or darkening of colors in materials selected as reference standards although some minor structural damage may also occur. Irradiation by ultraviolet energy in the 300 to 400 nanometer range can cause both structural damage, i.e., embrittlement, loss of tear strength and fading and darkening of colors. These problems are especially acute in those industries where reflectance standards or reflective coatings must be used for comparison purposes in various measuring and testing devices such as spectrophotometers, colorimeters, and reflectometers.

Examples of materials currently used for reflectance standard purposes which give rise to the problems mentioned above include pigmented paint, magnesium oxide, magnesium carbonate, Halon, and barium sulphate. Pigmented paint, for instance, can result in low reflectance, give rise to light stability problems, and can crack or chip upon aging. The use of magnesium oxide and magnesium carbonate presents problems of light stability, aging and efficiency. Barium sulphate and Halon powder are presently the most commonly used reflectance materials and form almost ideal white standards. Unfortunately, since barium sulphate and Halon exist as powders they are very fragile. Even when the powders are pressed, the barium sulphate and Halon remain fragile. Moreover, the pressed barium sulphate and Halon lack reproducible reflectance characteristics and they are not cleanable once the pressed or compacted surface is soiled. US-P 3,512,895 describes a spectroreflectometric reference standard including barium sulphate but this case is silent with regard to a particular purity or particle size.

An object of the present invention is to provide a material which can be used as a reflectance standard which is light stable and which has a high degree of reflectivity.

Another object of the present invention is to provide material which can be used as a reflectance standard in a variety of molded formats.

Still another object of the present invention is to provide a reflectance standard which does not have a large decrease in reflectance at lower wavelengths.

Yet another object of the present invention is to provide a reflectance standard which is cleanable and easy to manufacture.

In accordance with the present invention, at least 40 percent by weight of barium sulphate of a purity equivalent to at least USP Grade and a particle size of between 0.3 to 2 is $\mu$m is incorporated into a methyl acrylate or methyl methacrylate polymer, i.e., an "acrylate polymer", for use as a reflectance standard. It has been found that the thickness of the resulting polymer should be in excess of about 0.25 centimeters. Carbon black can be added in different proportions to obtain reflectance standards having different reflectance values. The resulting reflectance standards can be utilized in the form of chips, sheets or can be molded into various configurations, including that of an integrating sphere.

Other and further objects, advantages and features of the invention will be apparent to those skilled in the art from the following detailed description thereof, taken in conjunction with accompanying drawings in which:

Fig. 1 is a plot of wavelength vs. reflectance for various reflectance standards prepared in accordance with the present invention as well as a prior art black reflectance standard obtained from the National Bureau of Standards; and

Fig. 2 is a Plot of wavelength vs. reflectance for a prior art white ceramic tile reference standard of the National Bureau of Standards illustrating a large decrease in reflectance at lower wavelengths.

As indicated above, the reflectance standards of the present invention are prepared by incorporating barium sulphate in excess of 40 weight percent into thermoplastic methyl acrylate or methyl methacrylate polymers such as Plexiglas, which is the trademark of Rohm & Haas Co., Philadelphia, Pennsylvania. Ultraviolet filtering formulations of Plexiglas are sold by Rohm and Haas Company as Plexiglas UVA 3-7 molding pellets. Methyl acrylate and methyl methacrylate polymers are ideal for this purpose since the resulting plastic is transparent over wavelengths of interest. Preferred methyl acrylate and methyl methacrylate polymeric materials for use in the present invention are V811-UVT and V920-UVT-100 Plexiglas obtained from the RTP Company of Winona, Minnesota which have a transmittance in excess of 90% from 325 nm to 1000 nm for a 0.32 cm thick sample. The advantage of using special formulations of Plexiglas acrylic plastic in which most or all ultraviolet energy is filtered out is that such materials offer protection from structural damage caused by irradiation of ultraviolet energy below 400 nanometers. Typically, the acrylic plastic is available as molding pellets which is a convenient form for combination with the barium sulphate as described herein.

In contrast, when other materials, such as polystyrene, ethylene and propylene polymers, nylon, polycarbonate were substituted for methyl acrylate and methyl methacrylate polymers the resulting material could not be used because the plastics lacked sufficient transmittance characteristics over the wavelength range of interest. Most plastics have an absorption band around 400 nanometers (nm) which makes them unsuitable for use as reference standards.

The barium sulphate incorporated into the methyl methacrylate and methyl acrylate polymeric materials in accordance with the present invention must be of U.S.P. grade and a particle size of from 0.3 $\mu$m to 2 $\mu$m (microns). For optimum performance, the particles should be spherical to oblong in shape and have an average particle size of 0.75 x 0.50 $\mu$m.

It has been found that the amount of barium sulphate incorporated into the methyl acrylate or methyl methacrylate polymeric material should be in excess of 40 weight percent and preferably in excess of 60 weight percent. This is far in excess of the percentage of barium sulphate which has been used in the past for incorporation into plastic materials as a filler. Typically, the amount of barium sulphate used as a filler is less than five weight percent.

Methods of polymerizing the acrylate and methacrylate esters to form polymeric materials are well known. Thus, for purposes of this invention, the polymers herein can be made by conventional polymerization procedures from the monomeric materials. Basically, these procedures comprise heating the monomers for a sufficient period of time to obtain the resulting polymer. Preferably, the barium sulphate powder is mixed with granules of the thermoplastic methyl acrylate or methyl methacrylate polymeric material and the mixture is heated until a homogeneous mixture is obtained. Conveniently, the mixing can occur using an extruder. The extruded material is pelletized and then formed into the desired shape or configuration before being allowed to cool. Once the composition has cooled a hard, durable and cleanable reference standard is achieved. Thus, the resulting reference standard is not fragile and if it becomes dirty after use one can simply wash the plastic material to obtain a clean surface. If desired, the reference standard can have a smooth surface or a textured surface, depending on the particular application.

The resulting reflectance standard can achieve a reflectance of about 90 percent or more of the incident light having wavelengths between 3400 and 8000 angstrom units. This level of reflectance is usually considered in the art as a useful level of white light reflectancy since it is sufficiently "white" to be considered a white light reflectance standard.

Other reflectance standards can be prepared by incorporating carbon black to decrease the amount of reflectance over the desired wavelength range. The carbon black should be of U.S.P. grade. The amount of carbon black which can be added generally ranges from 0 to 0.05 weight percent. While theoretically there is no upper limit on the amount of carbon black which can be added normally one would not need to add in excess of 0.02 weight percent of carbon black since a satisfactory black reflectance standard can be obtained from the National Bureau of Standards.

Normally, other additives such as plasticizers, fillers, extenders are not necessary and indeed should not be added to the plastic composition during the formation of the reference standards since additives can tend to cause UV absorption.

The following examples are illustrative of the above described invention.

EXAMPLE I

Sixty weight percent of barium sulphate (USP grade, 325 mesh) is added to V920-UVT-100 Plexiglas obtained from the RTP Company by of Winona, Minnesota mixing the barium sulphate with the Plexiglas material while heating the granules of the polymeric material until a homogeneous mixture is obtained. The mixture is molded in the form of a 7.6 cm (3 inch) by 10.2 cm (4 inch) plaque having a thickness of 0.32 cm.

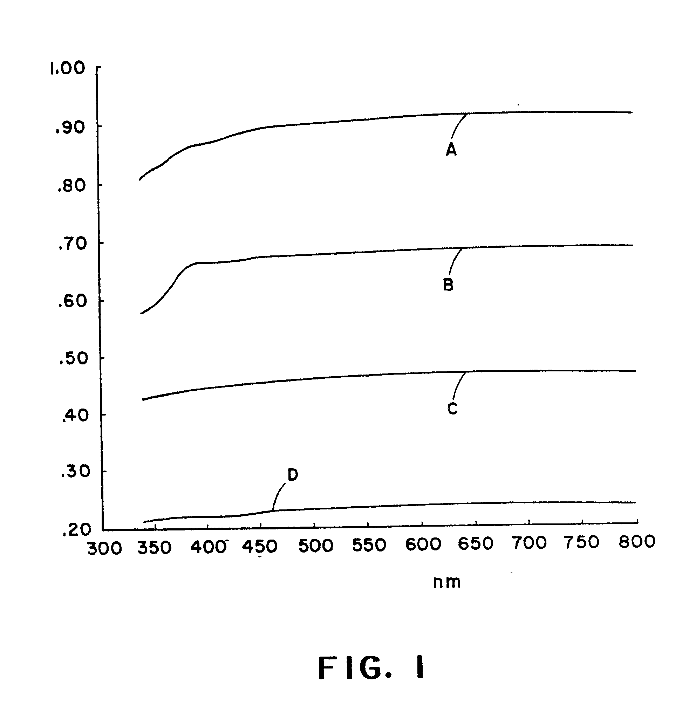

The resulting material has a reflectance sufficient to be useful as a white light reflectance standard. The reflectance of the resulting plate as determined using a Cary-17 spectrophotometer was plotted against wavelength in Fig. 1 as line A.

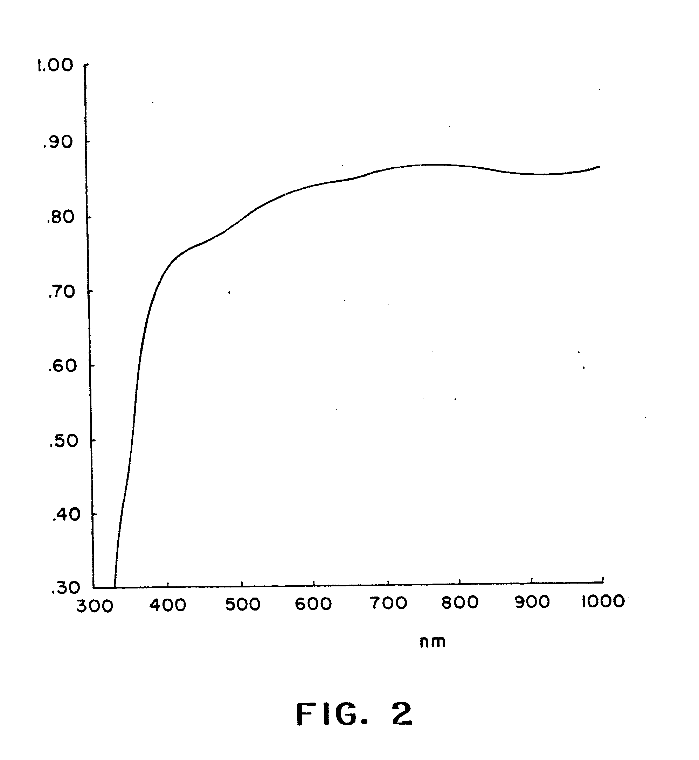

The reflectance standard of this Example should be compared with a prior art white ceramic tile reflectance standard, Standard Reference Material 2019, supplied by the National Bureau of Standards which is plotted in Fig. 2 to show reflectance over a similar wavelength range. It will be observed that in contrast to the reference standard of the present invention the National Bureau of Standards ceramic tile reference standard has a reflectance of approximately 85 percent over the wavelength range of 700 to a 1000 and this significantly falls off at lower wavelengths. This substantial reduction did not occur with the reflectance standards of the present invention.

## EXAMPLE II

Varying percentages of carbon black powder (Monarch 880, Cabot furnace carbon black) are added to the compositions used to prepare reflectance standard in accordance with Example I. Specifically, 0.00044 weight percent of carbon black is added in one embodiment to the barium sulphate polymeric mixture described in Example I and 0.01762 weight percent of carbon black was added in another instance. The procedure for incorporating the materials to form reference standards is exactly the same as in Example I.

By incorporating the carbon black in the percentages indicated above varying shades of gray were achieved which is illustrated in Fig. 1. dine B illustrates the reference standard obtained by incorporating 0.00044 weight percent of carbon black whereas line C illustrates the reflectance standard achieved by incorporating 0.01762 weight percent of carbon black. It can be seen from the plot of reflectance vs. wavelength for the resulting reflectance standards that lines B and C do not decrease significantly at the shorter wavelengths.

For comparison purposes, line D in Fig. 1 is a plot of reflectance vs. wavelength for a black reflectance standard, Standard Reference Material 2021, of the National Bureau of Standards.

Obviously, by incorporating various percentages of carbon black one can achieve an infinite number of reflectance standards ranging between a white reference standard such as that illustrated by line A in Fig. 1 and a black reference standard similar to that illustrated in line D of Fig. 1. For many applications it is desirable to utilize such reflectance standards which are between the extremes of a white reflectance standard and a black reflectance standard.

The material used to form reflectance standards in accordance with the present invention can be molded into almost any desired configuration, even including the shape of an intergrating sphere.

Other "white" materials added to plastic suffer from serious flaws. For example, Telfon becomes transparent under normal molding condition. Magnesium oxide and magnesium carbonate degrade under UV light. Titanium dioxide has an absorption band around 400 nm and thereby has a low reflectance in the UV.

From the the foregoing, it will be seen that this invention is well adapted to attain all of the ends and objects herein before set forth together with other advantages which are obvious and inherent. The materials used in accordance with the present invention are capable of providing a white reflectance standard or gray reflectance standards which do not show a large decrease in reflectance at wavelengths in the range of 340 to 800 nanometers. Moreover, the reflectance standards have the advantage of being durable and readily cleanable. The reflectance standards are easy to manufacture and can be formed into many desired configurations suitable for use in a wide variety of reflectance measuring instrumentation. In addition, the standards can be utilized over wavelengths in which most plastics have an absorption band rendering them unsuitable for use as standards.

Another advantage of the reference standards prepared in accordance with the present invention is the fact that reference standards can be used over long periods of time without reduction in reflectancy characteristics with age. Moreover, the reflectance standards can be used with essentially any desired light source such as incandescent, LED, arc lamps and flash lamps.

Obviously, many modifications and variations of the invention as hereinbefore set forth can be made without departing from the spirit and scope thereof and therefore only such limitations should be imposed as are indicated by the appended claims.

## Claims

1. A method for standardizing of light reflection measurements consisting essentially of directing light on a reflectance standard comprising an acrylate polymer having transmittance greater than 90 % over the range of from 325 nanometers to 1000 nanometers for a 0.32 centimeter thick sample and at least 40 % by weight of barium sulphate, wherein said barium sulphate has a purity equivalent to at least USP Grade and a particle size of between 0.3 to 2 μm and measuring the light reflected from said reflective standard.

2. The method for standardization of light reflection measurements in claim 1 in which the barium sulphate has an average particle size of 0.75 by 0.5 μm.

3. The method for standardization of light reflection measurements of claim 1 or 2 in which the acrylate polymer is methylacrylate polymer or a methylmethacrylate polymer.

4. The method for standardization of light reflection measurements according to any of claims 1 to 3 which also includes up to 0.05 weight percent carbon black in the reflectance standard.

5. The method of standardization of light reflection measurements according to any of claims 1 to 4 in which the barium sulphate is present in an excess of 60 weight percent.

6. The method of standardization of light reflection measurements according to any of claims 1 to 5 in which the particles of barium sulphate are spherical to oblong in shape.

7. The method for standardization of light reflection measurements according to any of claims 1 to 6 in which the measurements are made at wavelengths in the range of 340 to 800 nanometers.

**Revendications**

1. Procédé de standardisation de mesures de réflexion de la lumière, consistant essentiellement à envoyer la lumière sur un standard de réflectance constitué d'un polymère acrylate présentant une transmittance supérieure à 90% sur la plage de longueurs d'onde allant de 325 nanomètres à 1000 nanomètres pour un échantillon d'épaisseur 0,32 centimètres, ainsi que d'au moins 40% en poids de sulfate de baryum, procédé dans lequel ledit sulfate de baryum présente une pureté équivalente au moins à la qualité USP (programme de spécification uniforme des Etas-Unis) et une granulométrie comprise entre environ 0,3 et environ 2 μm, puis à mesurer la lumière réfléchie par ledit standard de réflectance.

2. Procédé de standardisation des mesures de réflexion de la lumière selon la revendication 1 dans lequel le sulfate de baryum présente une dimension moyenne de particules de 0,75 par 0,5 microns.

3. Procédé de standardisation des mesures de réflexion de la lumière selon la revendication 1 Ou 2, dans lequel le polymère acrylate est un polymère de méthylacrylate ou un polymère de méthylméthacrylate.

4. Procédé de standardisation des mesures de réflexion de la lumière selon l'une quelconque des revendications 1 à 3, dans lequel le standard de réflectance comporte également jusqu'à 0,05 pour cent en poids de noir de carbone.

5. Procédé de standardisation des mesures de réflexion de la lumière selon l'une quelconque des revendications 1 à 4, dans lequel le sulfate de baryum est présent dans une proportion supérieure à 60 pour cent en poids.

6. Procédé de standardisation des mesures de réflexion de la lumière selon l'une quelconque des revendications 1 à 5, dans lequel les particules de sulfate de baryum ont une forme allant de sphérique à oblongue.

7. Procédé de standardisation des mesures de réflexion de la lumière selon l'une quelconque des revendications 1 à 6, dans lequel les mesures sont effectuées aux longueurs d'onde allant de 340 à 800 naomètres.

**Ansprüche**

1. verfahren zum Standardisieren von Lichtreflexionsmessungen, welches im wesentlichen aus dem Richten von Licht auf einen Reflexionsstandard, umfassend ein Acrylatpolymer mit einer Lichtdurchlässigkeit grösser als 90 % über den Bereich von 325 bis 1000 nm für eine 0,32 cm dicke Probe und wenigstens 40 Gew.% Bariumsulfat, worin das Bariumsulfat eine Reinheit hat, die wenigstens dem USP-Grad äquivalent ist und eine Partikelgrösse zwischen etwa 0,3 und etwa 2 μm hat, und aus dem Messen des von dem Reflexionsstandard reflektierten Lichtes besteht.

2. Verfahren zum Standardisieren von Lichtreflexionsmessungen gemäss Anspruch 1, worin das Bariumsulfat eine durchschnittliche Partikelgrösse von 0,75 bis 0˙5 μm hat.

3. verfahren zum Standardisieren von Lichtreflexionsmessungen gemäss Ansprüchen 1 oder 2, worin das Acrylatpolymer Methacrylatpolymer oder ein Methylmethacrylatpolymer ist.

4. verfahren zum Standardisieren von Lichtreflexionsmessungen gemäss Ansprüchen 1 bis 3, welches auch bis zu 0,05 Gew.% Russ in dem Reflexionsstandard miteinschliesst.

5. Verfahren zum Standardisieren von Lichtreflexionsmessungen gemäss Ansprüchen 1 bis 4, worin das Bariumsulfat in einem Überschuss von 60 Gew.% vorliegt.

6. Verfahren zum Standardisieren von Lichtreflexionsmessungen gemäss Ansprüchen 1 bis 5, worin die Bariumsulfatpartikel eine sphärische bis rechteckige (oblong) Form haben.

7. Verfahren zum Standardisieren von Lichtreflexionsmessungen gemäss Ansprüchen 1 bis 6, worin die Messungen bei Wellenlängen im Bereich von 340 bis 800 nm durchgeführt werden.

FIG. I

FIG. 2